# EUROPÄISCHE PATENTSCHRIFT

(11) **EP 2 024 067 B1**
(45) Veröffentlichungstag und Bekanntmachung des Hinweises auf die Patenterteilung: **16.05.2012**
(21) Anmeldenummer: 07724693.2
(22) Anmeldetag: 27.04.2007
(51) Int. Cl.: B01D 63/02, B29C 70/84

(54) **VERFAHREN UND VORRICHTUNG ZUM EINBRINGEN EINER VERGUSSMASSE IN EINE FILTERVORRICHTUNG**
PROCESS AND APPARATUS FOR INTRODUCING A POTTING COMPOSITION INTO A FILTER APPARATUS
PROCÉDÉ ET DISPOSITIF POUR INTRODUIRE UNE MASSE DE SCELLEMENT DANS UN DISPOSITIF DE FILTRAGE

(30) Priorität: 05.05.2006 DE 102006021066
(43) Veröffentlichungstag der Anmeldung: 18.02.2009
(73) Patentinhaber: Fresenius Medical Care Deutschland GmbH, 61542 Bad Homburg (DE)
(72) Erfinder: HELFF, Markus, 68305 Mannheim (DE); KUGELMANN, Franz, 66606 Bliesen (DE)
(74) Vertreter: Laufhütte, Dieter
(86) Internationale Anmeldenummer: PCT/EP2007/003766
(87) Internationale Veröffentlichungsnummer: WO 2007/128440

(56) Entgegenhaltungen:
- EP-A- 0 521 495
- WO-A-03/028864
- JP-A- 8 019 729
- JP-A- 9 215 748
- JP-A- 61 171 504
- JP-A- 61 222 510
- JP-A- 2005 118 640

## Beschreibung

Die Erfindung betrifft ein Verfahren und eine Vorrichtung zum Einbringen einer Vergußmasse in eine Filtervorrichtung, vorzugsweise in einen Dialysefilter.

Filtervorrichtungen, wie Dialysefilter, weisen zwei Strömungsräume auf, von denen ein erster Raum durch die Röhrendurchgänge der Fasern eines Hohlfaserbündels und ein zweiter Raum durch ein das Hohlfaserbündel einfassendes Gehäuse gebildet wird, wobei die Endbereiche der Fasern nach dem Vergießen in eine Vergußmasse eingegossen sind. Üblicherweise werden hierzu zunächst die Hohlfaserbündel in das Gehäuse des Dialysefilters eingeführt und über ein geeignetes Verfahren werden die Enden der Hohlfaserbündel mit der Vergußmasse vergossen.

Derartige Verfahren zum Einbringen der Vergußmasse sind bereits aus der EP 305 687 A1 und der DE 101 47 907 A1 bekannt. Hier werden spezielle Vergußkappen auf das Gehäuse der Filtervorrichtung aufgesetzt, durch die Vergußmasse eingeleitet wird. Diese Zugänge für die Vergußmasse können radial oder axial angebracht sein. Die Filtervorrichtung wird in Rotation versetzt, so daß hier innerhalb der Filtervorrichtung die beispielsweise für die Dialyse benötigten zwei Flüssigkeitsräume für Blut und Dialysat entstehen. Nachdem die Vergußmasse ausgehärtet ist, wird die Vergußkappe abgezogen oder abgeschnitten und durch eine für die Dialyse benötigte Kappe mit entsprechenden Zugängen ersetzt. Hierbei werden üblicherweise nochmals Dichtungen benötigt, um die beiden Flüssigkeitsräume voneinander zu trennen.

Bei dem zuvor beschriebenen Verfahren und dem zur Durchführung dieses Verfahrens notwendigen Vorrichtungen zum Anbringen der Vergußmasse ist es notwendig, die zum Vergießen vorgesehenen Anschlüsse des Gehäuses mit der Vergußkammer, die die Vergußmasse fördert, zu verbinden. Da es sich hier um eine mechanische Steckverbindung handelt, ist das Miteinanderverbinden von Gehäuse und Vergußkammer aufwendig und es kann großteils nur manuell durchgeführt werden. Eine Automatisierung dieser Verbindung ist zwar theoretisch möglich, aber technisch äußerst komplex und kostspielig.

Aus der WO 03/006134 A2 ist ein speziell ausgestaltetes Gehäuse einer Filtervorrichtung bekannt. Dieses Gehäuse besitzt einen Rahmen mit zwei an den jeweiligen Enden liegenden Eintrittslöchern für die Vergußmasse. Die Vergußmasse wird zentral auf die Oberfläche des Gehäuses aufgebracht. Während der Rotation wird die Vergußmasse durch die Löcher in das Gehäuseinnere verteilt. Die mittels dieses bekannten Verfahrens eingebrachte Vergußmasse weist allerdings Asymmetrien auf. Die gewünschte gleichmäßige Rotationssymmetrie ist in diesem Verfahren nicht erreichbar.

Aus der JP61222510 ist ein Verfahren zum Einbringen einer Vergußmasse beschrieben, bei dem diese von einem Behälter über ein Rohr in die Vergußkappe geleitet wird.

Aufgabe der vorliegenden Erfindung ist es daher, ein Verfahren und eine Vorrichtung zum Einbringen einer Vergußmasse in eine Filtervorrichtung zu schaffen, das leicht automatisiert werden kann.

Erfindungsgemäß wird diese Aufgabe durch ein Verfahren gemäß Anspruch 1 gelöst. Bei einem derartigen Verfahren zum Einbringen einer Vergußmasse in eine Filtervorrichtung mit zwei Strömungsräumen, von denen ein erster Raum durch die Röhrendurchgänge der Fasern eines Hohlfaserbündels und ein zweiter Raum durch ein das Hohlfaserbündel einfassendes Gehäuse gebildet wird, wobei die Endbereiche der Fasern nach dem Vergießen in eine Vergußmasse eingegossen sind, besteht darin, daß zum Zwecke der Einbringung der Vergußmasse Vergußkappen aufgesetzt werden und daß die Vergußmasse von einer Vergußkammer über die Vergußkappen auf die Enden der Filtervorrichtung verteilt wird. Dabei wird die Vergußmasse erfindungsgemäß ausgehend von der Vergußkammer in einen rotationssymmetrischen freiauskragenden Vorsprung der jeweiligen Vergußkappe geleitet, von wo sie vorteilhaft über entsprechende Schlitze der Vergußkappe in das Gehäuse eindringt.

Die Vergußkammer und die Filtervorrichtung werden erfindungsgemäß in Rotation versetzt, so daß die Vergußmasse über Fliehkräfte eingespritzt wird. Synchronisiert mit der Filtervorrichtung rotiert die Vergußkammer. Das Einspritzen der Masse kann berührungslos erfolgen, d. h. das Filtergehäuse und die Vergußkammer können voneinander beabstandet in Rotation versetzt werden und anschließend synchronisiert werden, so daß der Ausgang der Vergußkammer in Übereinstimmung mit dem umlaufenden Vorsprung der Kappe liegt. Dann erfolgt das Einspritzen der Vergußmasse, weiche durch die Fliehkräfte in die Kappe gelangt und sich dort entsprechend verteilt. Hierdurch wird vorteilhaft erreicht, daß etwaige Toleranzen oder Fluchtfehler zwischen der rotierenden Zentrifuge, in der die Filtergehäuse gelagert sind, und der rotierenden Vergußkammer nicht mehr zu Problemen führen. Der Toleranzausgleich ist gewährleistet.

Eine Automatisierung des Vergusses ist in einfacher Weise möglich. Dies ist insbesondere dadurch bedingt, daß die auf der Filtervorrichtung angeordnete Vergußkappen jeweils einen rotationssymmetrischen freiauskragenden Vorsprung aufweist, so daß die Drehlage des Filters beliebig gewählt werden kann. Hierdurch ist eine Automatisierung ermöglicht. Die Vergußkammer kann im Bereich des Vergußkopfes integriert werden. Die Vergußmasse kann gleichmäßig radial in den Endbereich der Filtervorrichtung einströmen. Weiterhin kann die Vergußkammer mehrfach verwendet werden, da sie ja nicht mit den jeweiligen nur einmal zu verwenden Vergußkappen in Verbindung steht.

Vorteilhafte Ausgestaltungen der Erfindung ergeben sich aus den Unteransprüchen.

Gemäß einer vorteilhaften Ausgestaltung kann mittels der Vergußkammer die Vergußmasse gleichzeitig in zwei übereinander gekreuzte Filtervorrichtungen eingespritzt werden. Hierzu kann die Vergußkammer dann vier Auslaßöffnungen aufweisen.

Anstatt zwei gekreuzter Filter können drei, vier und mehr Filter übereinander angeordnet sein, während sie vergossen werden. Grundsätzlich können die Filter dabei in einem beliebigen Winkel zueinander angeordnet sein. Aus Symmetriegründen und zur Vermeidung von Unwuchten während der Rotation bietet es sich an, zwei übereinander angeordnete Filter im Winkel von 90° zueinander anzuordnen. Bei drei Filtern kann der Winkel 60°, bei vier Filtern 45° betragen, usw.. Bei parallel zueinander angeordneten Filtern können beliebig viele Filter vergossen werden.

Weiterhin kann die Vergußkammer über eine elektrische Synchronisation an eine laufende Zentrifuge angekoppelt werden, bevor die Vergußmasse eingespritzt wird.

Die Erfindung betrifft auch eine Vorrichtung zum Einbringen einer Vergußmasse in eine Filtervorrichtung mit Strömungsräumen, von denen ein erster Raum durch die Röhrendurchgänge der Fasern eines Hohlfaserbündels und ein zweiter Raum durch ein das Hohlfaserbündel einfassendes Gehäuse gebildet wird, wobei die Endbereiche der Fasern eingegossen sind. Erfindungsgemäß weist diese Vorrichtung Vergußkappen auf, die auf die Enden des Gehäuses aufsteckbar sind, wobei ein freiauskragender rotationssymmetrischer Vorsprung über die Gehäusewandung heraussteht. Weiterhin ist jeweils eine horizontal ausgerichtet Vergußkammer vorgesehen, deren Auslauföffnungen zum rotationssymmetrischen Vorsprung der Verschlußkappen hin gerichtet sind.

In der Vergußkappe sind vorteilhaft Schlitze ausgenommen, die über am Ende des Gehäuses versehene Schlitze oder Öffnungen eine Verbindung zum Inneren des Gehäuses darstellen. Durch diese Verbindung fließt die Vergußmasse in die jeweiligen Endbereiche der Vorrichtung.

Zwischen der jeweiligen Auslaßöffnung der Vergußkammer und dem rotationssymmetrischen Vorsprung kann ein spaltförmiger Freiraum gelassen sein.

Besonders vorteilhaft sind mit der Haltevorrichtung zwei gekreuzte übereinander angeordnete Filtervorrichtungen gehalten. Hierdurch läßt sich in kompakter Form eine gleichzeitige Befüllung von zwei Filtervorrichtungen durchführen.

Schließlich betrifft die Erfindung eine Vergußkappe für eine vorgenannte Vorrichtung, mit einem rotationssymmetrischen freiauskragenden Vorsprung. In dem Bereich, der von dem kragenförmigen Vorsprung umgeben ist, sind auf Umfang gleichverteilt Schlitze angeordnet.

Weitere Einzelheiten und Vorteile der vorliegenden Erfindung werden anhand eines in der Zeichnung dargestellten Ausführungsbeispiels näher erläutert. Es zeigen:
- Fig. 1:: einen schematischen Längsschnitt durch das Gehäuse einer Filtervorrichtung mit aufgesetzten Vergußkappen und aufgesetzter Vergußkammer gemäß der vorliegenden Erfindung,
- Fig. 2:: eine vergrößerte Schnittdarstellung gemäß Fig. 1, wobei auf der Vergußkappe noch eine Abschlußkappe aufgesetzt ist,
- Fig. 3:: eine Schnittdarstellung einer Vorrichtung zum Einbringen einer Vergußmasse in eine Filtervorrichtung,
- Fig. 4:: die Darstellung gemäß Fig. 3 in Draufsicht,
- Fig. 5:: eine perspektivische Darstellung der Vorrichtung gemäß Fig.3 und
- Fig. 6:: eine alternative Anordnung der Filtervorrichtungen zum Einbringen der Vergußmasse.

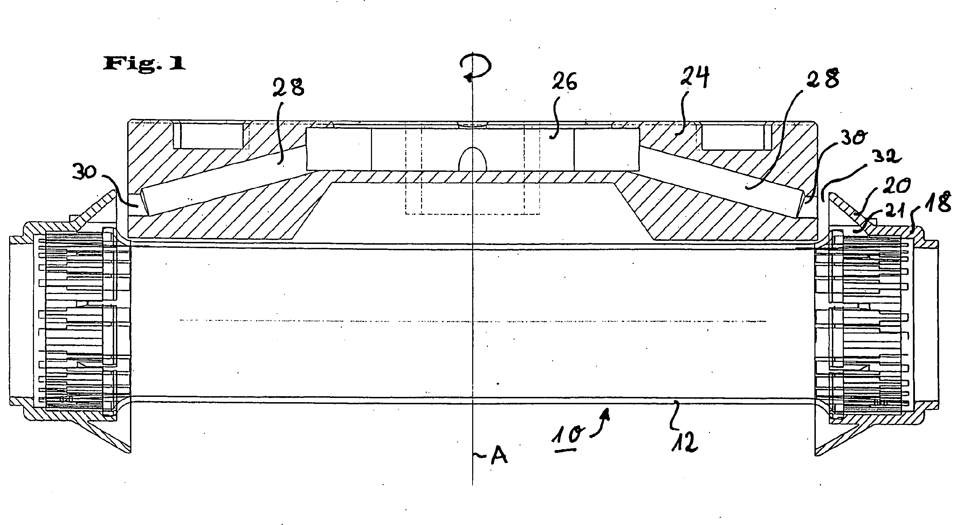

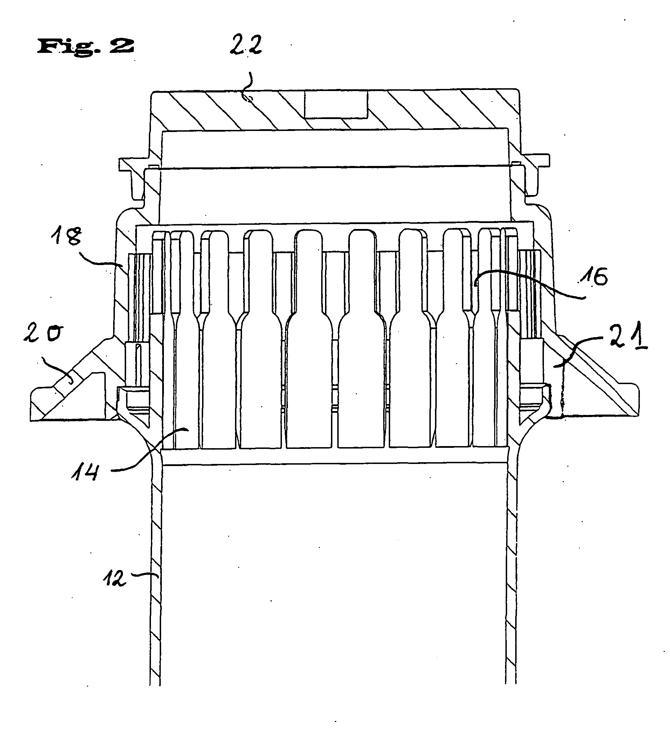

In Fig. 1 ist eine Filtervorrichtung 10 dargestellt, bei der aus Vereinfachungsgründen nur das Gehäuse 12, das die Form eines langgestreckten Zylinders hat, dargestellt ist. In bekannter Art und Weise weist das Gehäuse 12 an seinen jeweiligen Endbereichen Laschen 14 auf, zwischen denen Zwischenräume 16 ausgenommen sind (vgl. Fig. 2).

Zum Einbringen der Vergußmasse, die vorteilhaft aus Polyurethan besteht, sind auf die jeweiligen Enden des Gehäuses 12 Vergußkappen 18 aufgesteckt, die jeweils einen rotationssymmetrisch freiauskragenden Vorsprung 20 aufweisen, der wie insbesondere der Fig. 2 zu entnehmen ist, eine angeschrägte Außenkante aufweist. Unterhalb dieses auskragenden Vorsprungs 20 weist die Wandung der Vergußkappe, die auf das Gehäuse 12 aufgesteckt wird, gleichverteilt auf den Umfang Schlitze 21 auf. Die Schlitze 21 sind in Figur 1 und Figur 2 ohne Schraffierungen dargestellt. In der hier dargestellten Ausführungsvariante ist die Vergußkappe an ihrem äußeren Ende über eine Kappe 22 verschließbar.

In der Figur 1 ist eine Vergußkammer 24 dargestellt, die sich im wesentlichen horizontal entlang des Gehäuses 12 erstreckt. Diese Vergußkammer weist eine zentrale Ausnehmung 26 auf, in die das Vergußmaterial eingefüllt wird. Die Vergußkammer 24 und das Gehäuse 12 werden um die Rotationsachse A in Drehbewegung versetzt. Die Drehbewegung der Vergußkammer 24 wird mit der Drehbewegung der Zentrifuge (hier nicht dargestellt), die die Filtergehäuse hält, synchronisiert. Das in die Kammer 26 eintretende Vergußmaterial wird über Kanäle 28 zu Austrittsöffnungen 30 in der Vergußkammer gefördert. Dort tritt es aus und überbrückt einen Spalt 32 zwischen der Vergußkammer 24 und dem auskragenden Vorsprung 20 der Vergußkappe 18. Das Vergußmaterial fängt sich an dem schrägen Vorsprung 20 und wird dann, da dieser schräge Vorsprung 20 rotationssymmetrisch ausgebildet ist, über den gesamten Umfang des Gehäuses 12 verteilt. Aufgrund der weiter wirkenden Fliehkräfte tritt die Vergußmasse durch die Schlitze in der Vergußkappe und die Zwischenräume 16 im Gehäuse in das Innere des Gehäuses ein und verteilt sich dort gleichmäßig.

Hierdurch kann eine automatisierte und gleichmäßige Verteilung der Vergußmasse erfolgen.

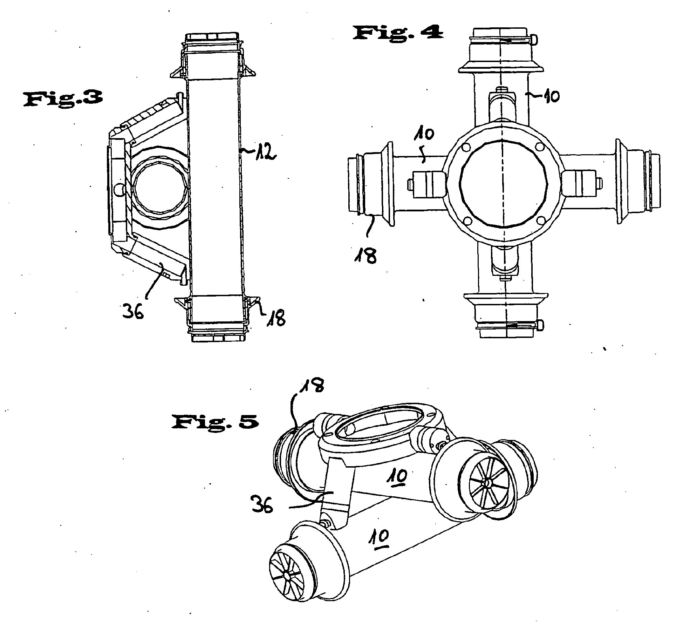

In den Figuren 3 bis 5 ist eine besondere Ausführungsform der Erfindung gezeigt. Hier sind zwei Filtervorrichtungen 10 unter 90° gekreuzt übereinander in einer nicht näher dargestellten Haltevorrichtung aufgenommen. Über die Haltevorrichtung werden die gekreuzt übereinander angeordneten Filtervorrichtungen 10 in Rotation versetzt. Die Vergußkammer 36 wird parallel in Rotation versetzt, wobei die Rotationsgeschwindigkeiten derart synchronisiert werden, daß die Öffnungen 30 den auskragenden Vorsprüngen 20 der Vergußkappen 18 gegenüberliegen. Während dieser synchronisierten Rotation wird die Vergußmasse in die Filtervorrichtung eingespritzt.

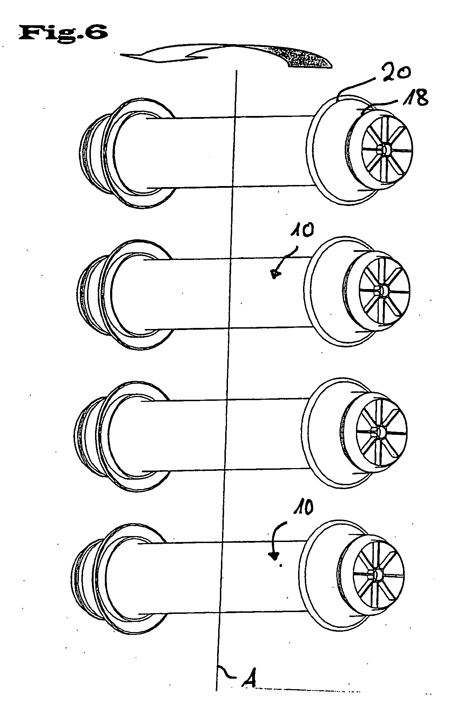

Figur 6 zeigt eine alternative Anordnung der Filtervorrichtungen 10 während des Befüllens mit Vergußmasse. Zur Vereinfachung sind nur die Filtervorrichtungen gezeigt, die hier parallel zueinander ausgerichtet sind und gemeinsam in Pfeilrichtung um die Achse A in Rotation versetzt werden. In dieser parallelen Anordnung können beliebig viele Filter vergossen werden. Hierzu wird die hier nicht dargestellte Vergußkammer nach erfolgter Synchronisation parallel zu den Filtervorrichtungen gebracht, um die Vergußmasse einzuspritzen.

## Patentansprüche

1. Verfahren zum Einbringen einer Vergußmasse in eine Filtervorrichtung (10) mit zwei Strömungsräumen, von denen ein erster Raum durch die Röhrendurchgänge der Fasern eines Hohlfaserbündels und ein zweiter Raum durch ein das Hohlfaserbündel einfassendes Gehäuse (12) gebildet wird, wobei die Endbereiche der Fasern nach dem Vergießen in einer Vergußmasse eingegossen sind, wobei zum Zwecke der Einbringung der Vergußmasse Vergußkappen (18) aufgesetzt werden und wobei die Vergußmasse von einer Vergußkammer (24) über die Vergußkappen (18) auf die Enden der Filtervorrichtung (10) verteilt wird,
und die Vergußkammer (24) und die Filtervorrichtung (10) in Rotation versetzt werden, so dass die Vergußmasse über Fliehkräfte eingespritzt wird,
**dadurch gekennzeichnet,**
**dass** die Vergußmasse ausgehend von der Vergußkammer (24) unter Überwindung eines Spaltes (32) zwischen der Vergußkammer (24) und der Vergußkappe (18) in einen rotationssymmetrischen frei auskragenden Vorsprung (20) der jeweiligen Vergußkappe (18) durch Einspritzen geleitet wird.

2. Verfahren nach Anspruch 1, **dadurch gekennzeichnet, daß** die Vergußmasse über entsprechende Schlitze (21) der Vergußkappe in das Gehäuse eindringt.

3. Verfahren nach einem der Ansprüche 1 oder 2, **dadurch gekennzeichnet, daß** mittels der Vergußkammer (24) die Vergußmasse gleichzeitig in mindestens zwei übereinander angeordnete, vorzugsweise gekreuzte, Filtervorrichtungen (10) eingespritzt wird.

4. Verfahren nach einem der Ansprüche 1 bis 3, **dadurch gekennzeichnet, daß** die Vergußkammer (24) über eine elektrische Synchronisation an eine laufende Zentrifuge angekoppelt wird, bevor die Vergußmasse eingespritzt wird.

5. Vorrichtung zur Durchführung des Verfahrens gemäß Anspruch 1 mit zwei Strömungsräumen, von denen ein erster Raum durch die Röhrendurchgänge der Fasern eines Hohlfaserbündels und ein zweiter Raum durch ein das Hohlfaserbündel einfassendes Gehäuse (12) gebildet wird,
bestehend aus:
- Vergußkappen (18), die auf die Enden des Gehäuses (12) aufsteckbar sind, wobei ein frei auskragender rotationssymmetrischer Vorsprung (20) über die Gehäusewandung heraussteht und
- einer horizontal ausgerichtete Vergußkammer (24) , deren Auslauföffnungen (30) zum rotationssymmetrischen Vorsprung (20) der Vergußkappen (18) hin gerichtet sind.

6. Vorrichtung nach Anspruch 5, **dadurch gekennzeichnet, daß** in der Vergußkappe (18) Schlitze (21) ausgenommen sind, die eine Verbindung zum Inneren des Gehäuses (12) herstellen.

7. Vorrichtung nach Anspruch 6, **dadurch gekennzeichnet, daß** zwischen der jeweiligen Auslaßöffnung der Vergußkammer (12) und dem rotationssymmetrischen Vorsprung (20) ein spaltförmiger Freiraum freigelassen ist.

8. Vorrichtung nach einem der vorangehenden Ansprüche, **dadurch gekennzeichnet, daß** die Haltevorrichtung mindestens zwei übereinander angeordnete, vorzugsweise gekreuzte, Filtervorrichtungen (10) aufnimmt und daß die Vergußkammer (24) mindestens vier Auslaßöffnungen (30) aufweist.

9. Vergußkappe für eine Vorrichtung nach einem der Ansprüche 5 bis 8, **dadurch gekennzeichnet, daß** sie einen rotationssymmetrischen frei auskragenden schrägen Vorsprung (20) aufweist und daß auf Umfang Schlitze (21) angeordnet sind, die in dem Bereich angeordnet sind, der von dem kragenförmigen Vorsprung (20) umgeben ist.

10. Vergußkappe für eine Vorrichtung nach Anspruch 9, **gekennzeichnet durch** auf Umfang gleichverteilte Schlitze (21).

## Claims

1. A method for introducing a sealing compound into a filter device (10) with two flow spaces, a first space of which is formed by the tubular passages of the fibers of a bundle of hollow fibers and a second space of which is formed by a housing (12) enclosing the bundle of hollow fibers, wherein the end regions of the fibers are encapsulated in a sealing compound upon sealing, wherein sealing caps (18) are attached for the purpose of introducing the sealing compound, and wherein the sealing compound is distributed from a sealing chamber (24) via the sealing caps (18) onto the ends of the filter device (10) and the sealing chamber (24) and the filter device (10) are rotated, so that the sealing compound is injected by means of centrifugal forces,
**characterized in that**
proceeding from the sealing chamber (24) by overcoming a gap (32) between the sealing chamber (24) and the sealing cap (18) the sealing compound is introduced into a rotationally symmetrical cantilevered projection (20) of the respective sealing cap (18) by injection.

2. The method according to claim 1, **characterized in that** the sealing compound penetrates into the housing via corresponding slots (21) of the sealing cap.

3. The method according to any of claims 1 or 2, **characterized in that** by means of the sealing chamber (24) the sealing compound is simultaneously injected into at least two superimposed, preferably crossed filter devices (10).

4. The method according to any of claims 1 to 3, **characterized in that** the sealing chamber (24) is coupled to a running centrifuge by means of an electric synchronization, before the sealing compound is injected.

5. An apparatus for carrying out the method according to claim 1 with two flow spaces, a first space of which is formed by the tubular passages of the fibers of a bundle of hollow fibers and a second space of which is formed by a housing (12) enclosing the bundle of hollow fibers,
**comprising:**
- sealing caps (18) which can be put onto the ends of the housing (12), wherein a cantilevered rotationally symmetrical projection (20) protrudes beyond the housing wall, and
- a horizontally aligned sealing chamber (24), whose outlet openings (30) are directed towards the rotationally symmetrical projection (20) of the sealing caps (18).

6. The apparatus according to claim 5, **characterized in that** in the sealing cap (18) slots (21) are provided, which create a connection to the interior of the housing (12).

7. The apparatus according to claim 6, **characterized in that** between the respective outlet opening of the sealing chamber (12) and the rotationally symmetrical projection (20) a gap-shaped clearance is left.

8. The apparatus according to any of the preceding claims, **characterized in that** the holding device accommodates at least two superimposed, preferably crossed filter devices (10) and that the sealing chamber (24) has at least four outlet openings (30).

9. A sealing cap for an apparatus according to any of claims 5 to 8, **characterized in that** it has a rotationally symmetrical cantilevered inclined projection (20) and that slots (21) are arranged around the circumference, which are arranged in the region which is surrounded by the collar-shaped projection (20).

10. The sealing cap for an apparatus according to claim 9, **characterized by** slots (21) uniformly distributed around the circumference.

## Revendications

1. Procédé destiné à l'introduction d'une masse de scellement dans un dispositif de filtrage (10) avec deux chambres d'écoulement, dont une première chambre est constituée par les passages de conduites des fibres d'un faisceau de fibres creuses et une deuxième chambre par une carcasse (12) entourant le faisceau de fibres creuses, les zones d'extrémité des fibres étant coulées après le scellement dans une masse de scellement, des capuchons d'enrobage (18) étant posés en vue de l'introduction de la masse de scellement, la masse de scellement étant répartie par une chambre de scellement (24) via les capuchons d'enrobage (18) sur les extrémités du dispositif de filtrage (10),
et la chambre de scellement (24) et le dispositif de filtrage (10) étant mis en rotation, de sorte que la masse de scellement est injectée par des forces centrifuges,
**caractérisé en ce que**
la masse de scellement partant de la chambre de scellement (24) par pénétration dans un interstice (32) entre la chambre de scellement (24) et le capuchon d'enrobage (18) est canalisée par injection dans un ressaut (20) en saillie libre à rotation symétrique du capuchon d'enrobage respectif (18).

2. Procédé selon la revendication 1, **caractérisé en ce que** la masse de scellement pénètre via des fentes correspondantes (21) du capuchon d'enrobage dans la carcasse.

3. Procédé selon une quelconque des revendications 1 ou 2, **caractérisé en ce qu'**au moyen de la chambre de scellement (24), la masse de scellement est injectée simultanément dans au moins deux dispositifs de filtrage (10) disposés l'un au-dessus de l'autre, croisés de préférence.

4. Procédé selon une quelconque des revendications 1 à 3, **caractérisé en ce que** la chambre de scellement (24) est accouplée via une synchronisation électrique à une centrifuge en marche, avant que la masse de scellement soit injectée.

5. Dispositif destiné à l'exécution du procédé selon la revendication 1 avec deux chambres d'écoulement, dont une première chambre est constituée par les passages de conduites des fibres d'un faisceau de fibres creuses et une deuxième chambre par une carcasse (12) entourant le faisceau de fibres creuses,
**se composant :**
- des capuchons d'enrobage (18), qui sont enfichables aux extrémités de la carcasse (12), un ressaut (20) en saillie libre à rotation symétrique dépassant au-dessus de la paroi de la carcasse et
- d'une chambre de scellement (24) alignée horizontalement, dont les orifices d'écoulement (30) sont orientés vers le ressaut à rotation symétrique (20) des capuchons d'enrobage (18).

6. Dispositif selon la revendication 5, **caractérisé en ce que** dans le capuchon d'enrobage (18), des fentes (21) sont creusées, qui établissent une liaison avec l'intérieur de la carcasse (12).

7. Dispositif selon la revendication 6, **caractérisé en ce qu'**entre l'orifice d'écoulement respectif de la chambre de scellement (12) et le ressaut à rotation symétrique (20), un espacement en forme de fente est laissé libre.

8. Dispositif selon une quelconque des revendications précédentes, **caractérisé en ce que** le dispositif de fixation accueille au moins deux dispositifs de filtrage (10) disposés l'un au-dessus de l'autre, croisés de préférence et **en ce que** la chambre de scellement (24) présente au moins quatre orifices d'écoulement (30).

9. Capuchon d'enrobage pour un dispositif selon une quelconque des revendications 5 à 8, **caractérisé en ce qu'**il présente un ressaut oblique (20) en saillie libre à rotation symétrique et **en ce que** sur la circonférence, des fentes (21) sont disposées, qui sont placées dans la zone qui est entourée par le ressaut en forme de col (20).

10. Capuchon d'enrobage pour un dispositif selon la revendication 9, **caractérisé par** des fentes (21) réparties de manière homogène sur la circonférence.
